# EUROPÄISCHE PATENTSCHRIFT

(11) **EP 3 707 036 B1**
(45) Veröffentlichungstag und Bekanntmachung des Hinweises auf die Patenterteilung: **30.11.2022**
(21) Anmeldenummer: 18782991.6
(22) Anmeldetag: 05.10.2018
(51) Int. Cl.: B60S 5/06

(54) **MOBILE LADESTATION UND VERFAHREN ZUM LADEN EINES ELEKTROFAHRZEUGES**
MOBILE CHARGING STATION AND METHOD FOR CHARGING AN ELECTRIC VEHICLE
STATION DE CHARGE MOBILE ET PROCÉDÉ SERVANT À CHARGER UN VÉHICULE ÉLECTRIQUE

(30) Priorität: 10.11.2017 DE 102017220017
(43) Veröffentlichungstag der Anmeldung: 16.09.2020
(73) Patentinhaber: Volkswagen AG, 38436 Wolfsburg (DE); Kuka AG, 86165 Augsburg (DE)
(72) Erfinder: SCHÜTZ, Daniel, 38165 Lehre/Essenrode (DE); HEROLD, Stephan, 38106 Braunschweig (DE); SETTELE, Norbert, 86574 Petersdorf-Willprechtszell (DE)
(74) Vertreter: Zucker, Volker
(86) Internationale Anmeldenummer: PCT/EP2018/077170
(87) Internationale Veröffentlichungsnummer: WO 2019/091674

(56) Entgegenhaltungen:
- WO-A1-2016/203383
- DE-A1-102009 006 982
- DE-A1-102014 220 256
- DE-A1-102015 213 160
- JP-A- H11 285 109
- US-A1- 2009 149 995
- US-A1- 2014 354 229
- US-A1- 2014 360 832
- US-B1- 9 778 653

## Beschreibung

Die Erfindung betrifft eine mobile Ladestation und ein Verfahren zum Laden eines Elektrofahrzeuges.

Ein Problem der Elektromobilität ist die Bereitstellung einer ausreichenden Ladeinfrastruktur sowie der unkomfortable Steckvorgang der Ladestecker in entsprechenden Ladebuchsen des Elektrofahrzeuges.

Zur Lösung dieser Probleme sind verschiedene Ansätze bekannt. So ist beispielsweise aus der US 9 056 555 B1 ein mobiler Laderoboter bekannt, der mit einer stationären Ladesäule elektrisch verbunden ist. Der mobile Roboter kann dann zu einem Fahrzeug fahren und automatisiert den Ladestecker stecken, wobei dann das Fahrzeug elektrisch durch die stationäre Ladesäule geladen wird. Dabei kann der Roboter direkt über die Ladesäule mit elektrischer Energie versorgt werden oder aber über eine Batterieeinheit verfügen, die über die stationäre Ladesäule geladen wird.

Aus der DE 10 2014 226 357 A1 ist eine ähnliche Ladestation zum automatischen Aufladen eines elektrischen Energiespeichers in einem Fahrzeug bekannt, umfassend eine Kommunikationsvorrichtung, die dazu ausgelegt ist, fahrzeugspezifisch Daten von dem Fahrzeug zu empfangen und unter Verwendung der empfangenen fahrzeugspezifischen Daten eine Position einer Ladebuchse an dem Fahrzeug zu ermitteln. Weiter weist die Ladestation einen Laderoboter auf, der einen Kontaktkopf mit einer Mehrzahl von Kontakten umfasst, wobei die Kontakte mit einer elektrischen Spannungsquelle verbunden sind, wobei der Laderoboter dazu ausgelegt ist, basierend auf der ermittelten Position der Ladebuchse an dem Fahrzeug eine Ladeposition anzufahren und nach dem Erreichen der Ladeposition den Kontaktkopf in die Ladebuchse des Fahrzeugs einzuführen und die Kontakte des Kontaktkopfes und Kontakten der Ladebuchse elektrisch zu verbinden.

Aus der DE 10 2014 220 256 A1 ist eine gattungsgemäße mobile Ladestation bekannt.

Aus der JP H 11 285 109 A ist es bekannt, ein entladenes Elektrofahrzeug durch ein anderes automatisiert fahrendes Elektrofahrzeug aufzuladen.

Aus der US 9,778,653 B1 ist ebenfalls das Aufladen eines Elektrofahrzeugs durch ein anderes selbsttätig bewegendes anderes Fahrzeug durchzuführen.

Aus der WO 2016/203383 A1 ist eine mobile Ladestation bekannt, die lösbare Batterieeinheiten aufweist, sowie eine Tragstruktur, mittels derer die mobile Ladestation auf eine Ladefläche eines Fahrzeugs für den Austausch der Batterieeinheiten mittels eines Krans gehoben werden kann.

Der Erfindung liegt das technische Problem zugrunde, den Ladevorgang für Elektrofahrzeuge weiter zu verbessern.

Die Lösung des technischen Problems ergibt sich durch eine mobile Ladestation mit den Merkmalen des Anspruchs 1 sowie ein Verfahren mit den Merkmalen des Anspruchs 4. Weitere vorteilhafte Ausgestaltungen der Erfindung ergeben sich aus den Unteransprüchen.

Hierzu umfasst die mobile Ladestation zum elektrischen Laden von Elektrofahrzeugen mindestens eine Batterieeinheit, mindestens eine erste Ladeschnittstelle zum Laden der Batterieeinheit, mindestens eine zweite Schnittstelle zum Laden eines Elektrofahrzeuges aus der Batterieeinheit, Mittel zum automatisierten Navigieren der mobilen Ladestation und Mittel zum Empfangen eines Ladewunsches.

Die Grundidee der Erfindung besteht darin die Energie für den Ladevorgang nicht mehr durch eine stationäre Ladestation zur Verfügung zu stellen sondern durch eine Batterieeinheit. Dadurch werden Reichweiteprobleme gelöst, die bei einer kabelgebundenen Lösung der Roboter an die stationäre Ladesäule auftreten. Dadurch kann die mobile Ladestation grundsätzlich an jeden beliebigen Ort beispielsweise in einem Parkhaus oder aber auch auf der Straße bewegt werden. Die reduziert den Bedarf an Infrastruktur erheblich und erhöht die Flexibilität, da die Fahrzeuge nicht an speziell vorgesehenen Plätzen abgestellt werden müssen.

Dabei sei angemerkt, dass Ausführungen möglich sind, wo die erste und die zweite Schnittstelle identisch sind. Die Mittel zum Empfangen eines Ladewunsches können eine drahtgebundene Schnittstelle oder eine Luftschnittstelle aufweisen, wobei der Ladewunsch mindestens eine Position des Fahrzeugs umfasst. Der Ladewunsch kann aber auch bereits mehr Informationen enthalten wie beispielsweise die gewünschte Lademenge etc. Diese Daten können aber auch noch lokal ausgetauscht werden, wenn die mobile Ladestation das Fahrzeug erreicht hat. Die Mittel zum automatisierten Navigieren umfassen beispielsweise Kameras, Laserscanner, Ultraschallsensoren als Umfeldsensoren sowie eine Steuereinheit, um die mobile Ladestation mittels einer Karte zu lokalisieren und zu navigieren.

Dabei weist die mobile Ladestation eine mobile Roboterplattform und eine passive Plattform mit Rädern auf, die miteinander mechanisch koppelbar sind, wobei die mobile Roboterplattform mindestens einen elektrischen Antrieb aufweist, der durch eine weitere Batterieeinheit versorgt wird, wobei die Batterieeinheit zum Laden eines Elektrofahrzeuges auf der passiven Plattform angeordnet ist. Dabei fährt die Roboterplattform die passive Plattform zum Elektrofahrzeug, steckt mittels des Roboterarms die zweite Schnittstelle in das Fahrzeug, löst die mechanische Kopplung und fährt zu einem weiteren Fahrzeug oder zurück zur stationären Ladestation.

Dabei ist der Roboterarm vorzugsweise auf der mobilen Roboterplattform angeordnet.

In einer Ausführungsform weist die mobile Ladestation einen Roboterarm auf, der derart ausgebildet ist, dass automatisiert die erste Ladeschnittstelle mit einer stationären Ladesäule und/oder die zweite Schnittstelle mit einer Ladeschnittstelle eines Fahrzeuges verbunden werden kann, sodass ein manuelles Stecken vermieden wird. Vorzugsweise weist die mobile Ladestation mehrere verschieden erste und zweite Schnittstellen auf, umso möglichst flexibel einsetzbar zu sein.

In einer weiteren Ausführungsform ist der Batterieeinheit zum Laden eines Elektrofahrzeuges eine Kühleinrichtung zugeordnet, um große Ladeleistungen zu gewährleisten.

Hinsichtlich der verfahrensmäßigen Ausgestaltungen und vorbehaltlich auf die vorgegangenen Ausführungen Bezug genommen

Die Erfindung wird nachfolgend anhand bevorzugter Ausführungsbeispiele näher erläutert. Die Fig. zeigen:
- Fig. 1: eine Darstellung einer mobilen Ladestation in einer ersten nichtanspruchsgemäßen Ausführungsform,
- Fig. 2: eine Darstellung einer mobilen Ladestation in einer anspruchsgemäßen Ausführungsform und
- Fig. 3: eine alternative Darstellung einer mobilen Ladestation in einer dritten nichtanspruchsgemäßen Ausführungsform.

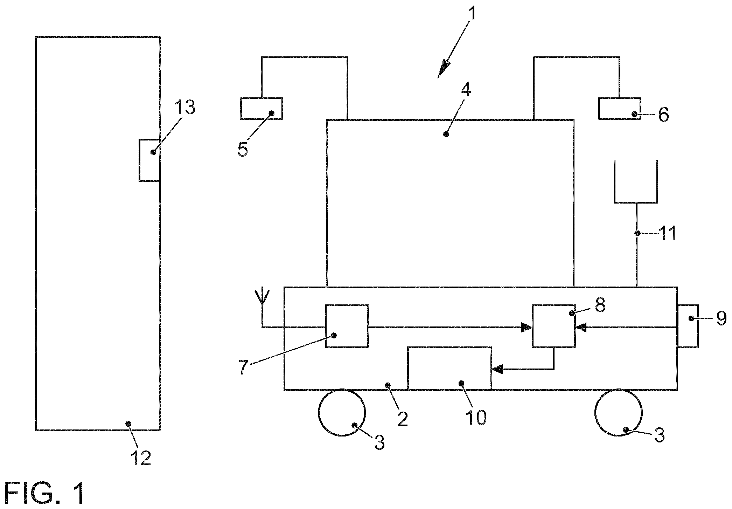

In der Fig. 1 ist eine mobile Ladestation 1 dargestellt, die eine Plattform 2 mit Rädern 3 aufweist. Auf der Plattform 2 ist eine Batterieeinheit 4 angeordnet, die mit mindestens einer ersten Ladeschnittstelle 5 zum Laden der Batterieeinheit 4 und mit mindestens einer zweiten Ladeschnittstelle 6 zum Laden eines nicht dargestellten Elektrofahrzeuges ausgebildet ist. Weiter weist die mobile Ladestation 1 Mittel 7 zum Empfang eines Ladewunsches auf. Weiter weist die mobile Ladestation 1 Mittel zum automatisierten Navigieren auf, die mindestens eine Steuereinheit 8 und Umfeldsensoriken 9 umfassen. Des Weiteren weist die mobile Ladestation 1 einen elektrischen Antrieb 10 und einen Roboterarm 11 auf, der durch eine nicht dargestellte Steuerung bewegt werden kann. Dabei werden die Mittel 7, Steuereinheit 8, Umfeldsensoriken 9, elektrischer Antrieb 10 und Roboterarm 11 elektrisch durch die Batterieeinheit 4 versorgt. Alternativ kann auch eine weitere Batterieeinheit zur Versorgung der Komponenten vorgesehen sein. Dabei sei angemerkt, dass anstelle von Rädern 3 auch Raupenketten oder Mecanum-Räder zur Anwendung kommen können.

Zunächst einmal wird die Batterieeinheit 4 mittels einer stationären Ladestation 12, die beispielsweise mit dem Wechselstromnetz verbunden ist geladen, wozu mittels des Roboterarms 11 die erste Ladeschnittstelle 5 in eine korrespondierende Ladeschnittstelle 13 der stationären Ladestation 12 gesteckt wird. Wird dann ein Ladewunsch von einem Elektrofahrzeug mittels der Mittel 7 empfangen, so wird bei ausreichender Ladung der Batterieeinheit 4 die erste Ladeschnittstelle 5 durch den Roboterarm 11 herausgezogen und die mobile Ladestation 1 automatisiert zum Elektrofahrzeug mit dem Ladewunsch navigiert. Dort steckt dann der Roboterarm 11 die zweite Ladeschnittstelle 6 in eine Ladeschnittstelle des Elektrofahrzeuges. Anschließend wird dann eine Batterie des Elektrofahrzeuges durch die Batterieeinheit 4 geladen. Vorzugsweise verfügt die mobile Ladestation 1 über weitere Steuereinheiten, die den Ladevorgang regeln (z.B. Ladestrom, Ladeleistung, Bezahlung etc.). Ist der Ladevorgang beendet, zieht der Roboterarm 11 die zweite Ladeschnittstelle 6 heraus und die mobile Ladestation 1 bewegt sich zurück zur stationären Ladestation 12 oder zu einem weiteren Elektrofahrzeug.

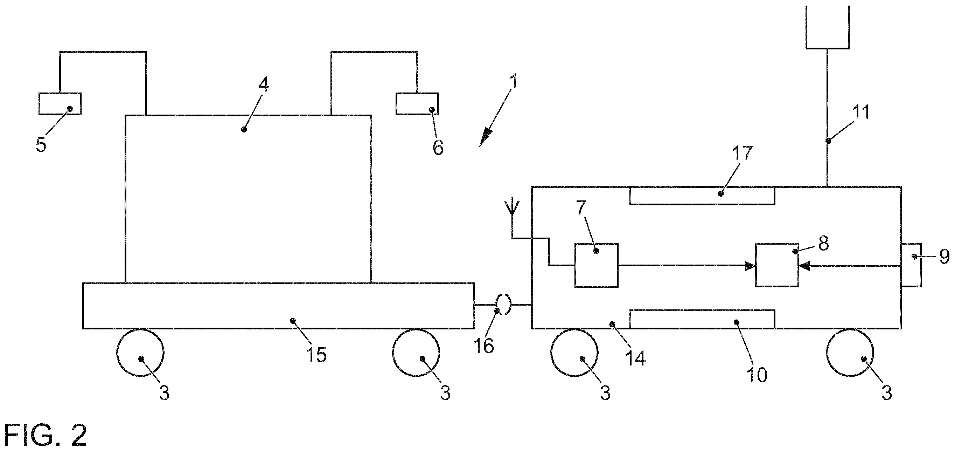

In der Fig. 2 ist eine Ausführungsform für eine mobile Ladestation 1 dargestellt, wobei die gleichen Elemente wie in Fig. 1 mit gleichen Bezugszeichen versehen sind. Im Gegensatz zur Ausführungsform gemäß Fig. 1 weist die mobile Ladestation 1 eine mobile Roboterplattform 12 und eine passive Plattform 15 auf, die über eine mechanische Kupplung 16 lösbar miteinander mechanisch koppelbar sind. Die mobile Roboterplattform 14 navigiert die passive Plattform 15 mit der Batterieeinheit 4 zum Elektrofahrzeug mit dem Ladewunsch, wobei dann der Roboterarm 11 wieder die zweite Ladeschnittstelle 6 in eine Ladeschnittstelle des Elektrofahrzeuges steckt. Anschließend kann dann die Kupplung 16 gelöst werden und die mobile Roboterplattform 14 zurück zur stationären Ladestation fahren, um eine neue passive Plattform zu einem Elektrofahrzeug zu fahren oder eine andere abgestellte passive Plattform zur stationären Ladestation zu schleppen. Da sich die mobile Roboterplattform 14 auch ohne Batterieeinheit 4 bewegen soll, weist diese eine weitere Batterieeinheit 17 auf, die die elektrische Versorgung der Komponenten und insbesondere des Antriebes 10 übernimmt.

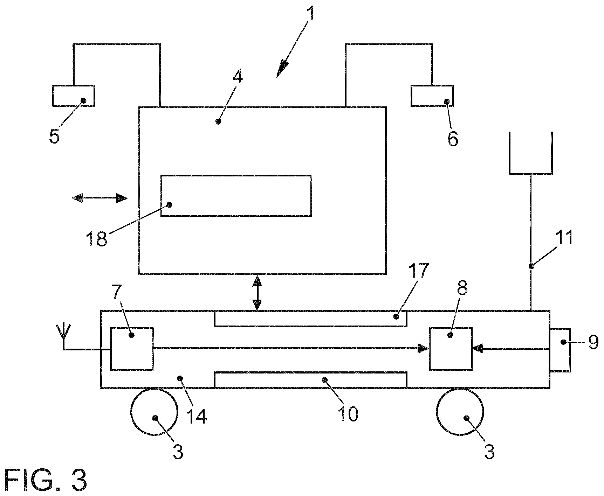

In der Fig. 3 ist eine weitere alternative Ausführungsform für die mobile Ladestation 1 dargestellt, wobei die Batterieeinheit 4 lösbar auf der mobilen Roboterplattform 14 angeordnet ist, was durch die Doppelpfeile symbolisch ist. Weiter weist die Batterieeinheit 4 eine Kühleinrichtung 18 auf, die auch bei den vorangegangen Ausführungsform vorhanden sein kann. Die mobile Roboterplattform 14 wird an der stationären Ladestation mit einer Batterieeinheit 4 beladen und fährt diese zu dem Elektrofahrzeug mit einem Ladewunsch. Anschließen wird die zweite Ladeschnittstelle 6 eingesteckt und die Batterieeinheit 4 von der Roboterplattform 14 auf dem Boden abgestellt. Anschließend kann dann die Roboterplattform 14 weiterfahren und neue Batterieeinheiten 4 aufnehmen.

## Patentansprüche

1. Mobile Ladestation (1) zum elektrischen Laden von Elektrofahrzeugen, umfassend mindestens eine Batterieeinheit (4), mindestens eine erste Ladeschnittstelle (5) zum Laden der Batterieeinheit (4), mindestens eine zweite Schnittstelle (6) zum Laden eines Elektrofahrzeuges aus der Batterieeinheit (4), Mittel zum automatisierten Navigieren der mobilen Ladestation (1) und Mittel (7) zum Empfangen eines Ladewunsches,
**dadurch gekennzeichnet, dass**
die mobile Ladestation (1) eine mobile Roboterplattform (14) und eine passive Plattform (15) mit Rädern (3) aufweist, die miteinander mechanisch koppelbar sind, wobei die mobile Roboterplattform (14) mindestens einen elektrischen Antrieb (10) aufweist, der durch eine weitere Batterieeinheit (17) versorgt wird, wobei die Batterieeinheit (4) zum Laden eines Elektrofahrzeuges auf der passiven Plattform (15) angeordnet ist.

2. Mobile Ladestation nach Anspruch 1,
**dadurch gekennzeichnet, dass**
die mobile Ladestation (1) einen Roboterarm (11) aufweist, der derart ausgebildet ist, dass automatisiert die erste Ladeschnittstelle (5) mit einer stationären Ladestation (12) und/oder die zweite Schnittstelle (6) mit einer Ladeschnittstelle eines Elektrofahrzeuges verbunden wird.

3. Mobile Ladestation nach einem der vorangegangen Ansprüche, **dadurch gekennzeichnet, dass** der Batterieeinheit (4) eine Kühleinrichtung (18) zugeordnet ist.

4. Verfahren zum Laden eines Elektrofahrzeuges mittels einer mobilen Ladestation (1) nach einem der vorangegangen Ansprüche,
**dadurch gekennzeichnet, dass**
die mobile Ladestation (1) automatisiert zu einem Elektrofahrzeug mit einem Ladewunsch navigiert wird, wobei die mobile Ladestation (1) während der Navigation und einem nachfolgendem Ladevorgang des Elektrofahrzeugs mit keiner stationären Ladestation verbunden ist, wobei nach einer Verbindung des Elektrofahrzeugs mit der Batterieeinheit (4) die Kopplung zwischen der mobilen Roboterplattform (14) und der passiven Plattform (15) gelöst wird und die Roboterplattform (14) zu einem weiteren Fahrzeug oder zu einer stationären Ladestation (12) fährt.

## Claims

1. A mobile charging station (1) for electrical charging of electric vehicles, comprising at least one battery unit (4), at least one first charging interface (5) for charging the battery unit (4), at least one second interface (6) for charging an electric vehicle from the battery unit (4), means for automatic navigation of the mobile charging station (1) and means (7) for receiving a charging request,
**characterized in that** the mobile charging station (1) has a mobile robot platform (14) and a passive platform (15) with wheels (3) that are mechanically couplable to one another, wherein the mobile robot platform (14) has at least one electrical drive (10), which is supplied with power by a further battery unit (17), wherein the battery unit (4) for charging an electric vehicle is arranged on the passive platform (15).

2. The mobile charging station according to claim 1,
**characterized in that** the mobile charging station (1) has a robot arm (11), which is designed such that the first charging interface (5) is automatically connected to a stationary charging station (12), and/or the second interface (6) is connected to a charging interface of an electric vehicle.

3. The mobile charging station according any of the preceding claims, **characterized in that** a cooling device (18) is assigned to the battery unit (4).

4. A method for charging an electric vehicle by means of a mobile charging station (1) according to any of the preceding claims,
**characterized in that** the mobile charging station (1) is automatically navigated to an electric vehicle with a charging request, wherein the mobile charging station (1) is not connected to a stationary charging station during the navigation and a subsequent charging process of the electric vehicle, wherein the coupling between the mobile robot platform (14) and the passive platform (15) is released after the electric vehicle has been connected to the battery unit (4), and the robot platform (14) travels to a further vehicle or to a stationary charging station (12).

## Revendications

1. Station de charge mobile (1) pour la charge électrique de véhicules électriques, comprenant au moins une unité de batterie (4), au moins une première interface de charge (5) pour la charge de l'unité de batterie (4), au moins une deuxième interface (6) pour la charge d'un véhicule électrique à partir de l'unité de batterie (4), un moyen pour la navigation automatisée de la station de charge mobile (1) et un moyen (7) pour la réception d'un souhait de charge,
**caractérisée en ce que** la station de charge mobile (1) présente une plateforme robotique mobile (14) et une plateforme passive (15) avec des roues (3), qui peuvent être accouplées mécaniquement l'une à l'autre, dans laquelle la plateforme robotique mobile (14) présente au moins un entraînement électrique (10), qui est alimenté par une autre unité de batterie (17), dans laquelle l'unité de batterie (4) pour la charge d'un véhicule électrique est agencée sur la plateforme passive (15).

2. Station de charge mobile selon la revendication 1,
**caractérisée en ce que** la station de charge mobile (1) présente un bras robotique (11), qui est conçu de telle sorte que la première interface de charge (5) soit connectée à une station de charge stationnaire (12) et/ou la deuxième interface (6) soit connectée à une interface de charge d'un véhicule électrique.

3. Station de charge mobile selon l'une quelconque des revendications précédentes, **caractérisée en ce qu'**un dispositif de refroidissement (18) est attribué à l'unité de batterie (4).

4. Procédé de charge d'un véhicule électrique au moyen d'une station de charge mobile (1) selon l'une quelconque des revendications précédentes,
**caractérisé en ce que** la station de charge mobile (1) est amenée à naviguer de manière automatisée vers un véhicule électrique avec un souhait de charge, dans lequel la station de charge mobile (1), pendant la navigation et un processus de charge suivant du véhicule électrique, n'est connectée à aucune station de charge stationnaire, dans lequel, après une connexion du véhicule électrique avec l'unité de batterie (4), l'accouplement entre la plateforme robotique mobile (14) et la plateforme passive (15) est rompu et la plateforme robotique (14) se déplace vers un autre véhicule ou vers une station de charge stationnaire (12).
